# EUROPEAN PATENT SPECIFICATION

(11) **EP 2 467 593 B1**
(45) Date of publication and mention of the grant of the patent: **25.03.2015**
(21) Application number: 10810279.9
(22) Date of filing: 18.08.2010
(51) Int. Cl.: F03B 13/18, F03B 13/20

(54) **WAVE ACTION ELECTRIC GENERATING SYSTEM**
SYSTEM ZUR STROMERZEUGUNG AUS WELLENBEWEGUNGEN
SYSTÈME DE PRODUCTION D ÉLECTRICITÉ PAR ACTION DES VAGUES

(30) Priority: 19.08.2009 US 272125 P
(43) Date of publication of application: 27.06.2012
(73) Proprietor: Werjefelt, Alexander, Kaneohe, HI 96744 (US)
(72) Inventor: Werjefelt, Alexander, Kaneohe, HI 96744 (US)
(74) Representative: Hössle Patentanwälte Partnerschaft
(86) International application number: PCT/US2010/002270
(87) International publication number: WO 2011/022057

(56) References cited:
- WO-A1-2008/094046
- US-A- 1 018 678
- US-A- 4 389 843
- US-A- 4 469 955
- US-A- 4 851 704
- US-A- 5 789 826
- US-A1- 2008 016 860
- US-A1- 2008 122 225
- US-A1- 2008 122 225

## Description

### Field of Invention

The present invention is generally directed to wave action electric generating systems and in particular to a wave action electric generating system that harnesses the rocking motion of a floating platform.

US 1,018,678 discloses a wave motor having at least two floats that are connected together flexibly, so as to respond readily to the rise and fall of waves. Between the floats a barge is installed to sustain the necessary machinery to convert the movement of the floats into electric power by means of a dynamo

WO 2008/094046 A1 discloses a device for utilising oceanwave energy functions through appropriate pontoons and an intermediate floating central unit located just beyond them. These are connected by appropriate arms using suitable hinges and having suitable cylindrical, hydraulic power jacks which alternatively pump a liquid under high static pressure to a turbine, preferably a constant pressure turbine. This converts the potential energy in the liquid into, for example, electric power when the arms are raised by the pontoons and the central unit sinks into the wave troughs, whereupon the pistons on the opposite side of the power jacks again suck in the continually circulating, energy bearing liquid as the arms sink when the pontoons enter troughs and the central unit rises on the wave crests.

### Summary of the Invention

The present invention provides a wave action electric generating system, comprising a platform for floating on water, the platform being subject to rocking from side to side from wave action; an electric generator; a rigid arm for extending over the water, the arm including a first end pivotally attached to the platform with a first pivot shaft; a buoyant member for being disposed on the water and pivotally connected to a second end of the arm with a second pivot shaft operably attached to the arm, the member when floating on water rises and falls with the waves, thereby alternately moving the arm about the first pivot shaft clockwise and counterclockwise; and a power converter for converting the moving of the arm to an output to drive the generator, wherein the arm is extendable or retractable to change a distance of said buoyant member to be nearer or further away from said platform.

### Brief Description of the Drawings

Fig. 1 is a side view of the wave action electric generator, arms and buoyant members as positioned in flat water.
Fig 2 is a side elevational view of Fig. 1, showing the platform tilting to the left, the right buoyant member tilting to the right and the left buoyant member tilting to the right, the right arm moving downward or clockwise, the left arm moving upward or clockwise, due to wave action.
Fig. 3 is a side elevational view of Fig. 1, showing the platform tilting to the left, the right buoyant member tilting to the left and the left buoyant member tilting to the left, the right arm moving upward or counterclockwise and the left arm moving downward or counter clockwise, due to wave action.
Fig. 4 is a schematic top elevational view of the platform, illustrating hydraulic arms' and buoyant members' ability to turn relative to the side of the platform thereby positioning the buoyant member toward or away from the edge of the platform.
Fig. 5 is a side elevational view of hydraulic pistons connected to the arm to harness the upward and downward motion of the arm.
Fig. 6 is a fragmentary side elevational view of the platform showing a hydraulic cylinder and piston assembly used to adjust the distance of the buoyant member relative to the platform, and another cylinder and piston assembly positioned on the buoyant member to harnesses the energy of the rocking motion of the buoyant member.
Fig. 7 is a schematic side elevational view of another embodiment of the present invention, showing a drag member positioned under the buoyant member to assist in a pulling force on the buoyant member connected to the arm.
Fig. 8 is a schematic flow diagram of a power converter showing the connection of a cylinder and piston assembly and an hydraulic motor.
Fig. 9 is a schematic diagram of another power converter using a gearing assembly for converting the pivoting motion of the arm to a unidirectional rotation.
Fig. 10 is a schematic diagram of another power converter for harnessing the power output of the cylinder and piston assemblies shown in Figs. 5 and 6.
Fig. 11 is a schematic diagram of another power converter for harnessing the power output of the cylinder and piston assemblies shown in Figs. 5 and 6.
Fig. 12 is another embodiment of the present invention showing a round or circular platform with several arms on the side.
Figs. 13 and 14 show several a round or circular float member attached to the arm of the platform with a plurality of cylinder and piston assemblies.

### Detailed Description of the Invention

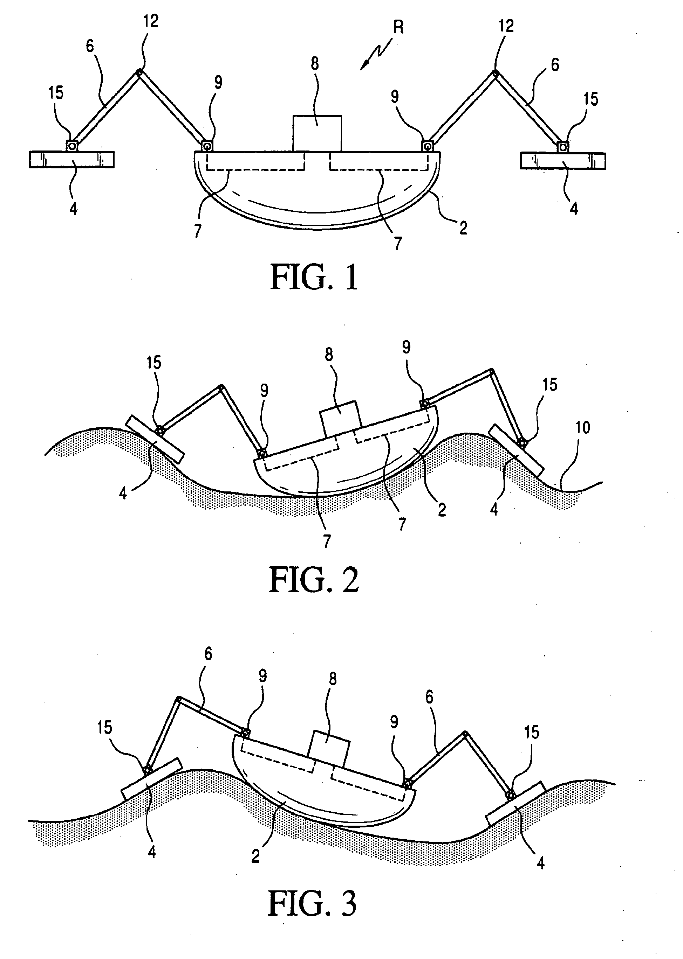

Referring to Figs. 1-3, a wave action electric generating system R is disclosed. A floating platform 2, such as a barge, boat etc., includes weighted buoyant members 4 designed to provide a pushing and pulling force to arms 6 when subjected to wave action. The buoyant members 4 are pivotally attached to the rigid arms 6, which in turn are connected and pivoted at pivot shafts 9 to the platform 2. The pivot shafts 9 are preferably rigidly attached to the arms 6 so that the movement of the arms 6 are transferred to a back and forth rotary motion of the pivot shafts 9, which are operably connected to a power converter comprising a gear assembly to convert the oscillatory-rotary motions of pivot shafts 9 to continuous rotation to drive the shaft of a generator 8. An example of a mechanism for converting the motions of the pivot shafts 9 is disclosed in US 2009/0322092 A.

A pivot joint 12 on the arm 6 allows the arm 6 to be extendable or retractable to change the distance of the buoyant member 4 to be nearer or further away from the platform. The pivot joint 12 is then locked after adjusting to the appropriate distance. Adjustment of the arm 6 is determined by the wavelength of the waves. Generally, the distance between the member 4 and the platform 2 is about one-half the wavelength of the waves to generate greater sweeping arcs for the arm 6 about the pivot shafts 9, such as that shown between one position shown in Fig. 2 and another position shown in Fig. 3. The buoyant members 4 are connected with pivoting shafts 15, the rotational motions of which can also be harnessed and used to drive the generator 8. A single or multitude of the arms 6 and float members 4 can be rigged to a single or multiple generators 8. The members 4 are shown being square in plan view, but may be of any shape that allows the members to float and track the up and down motion of the waves.

When the arm 6 is pulled downward (when the edge of the floating platform 2 moves upward and/or the buoyant member 4 moves downward by way of wave movement), the pivoting motion of the pivot shaft 9 is used to drive a hydraulic motor which in turn drives the generator 8. The pivoting motion can also drive a gearbox that in turn drives the generator. When the arm 6 is pushed upward (when the edge of the floating platform moves downward and/or the buoyant member moves upward by way of wave movement), the pivoting motion of the pivot shaft 9 can again drive the hydraulic motor or the gearbox connected to the generator 8.

Referring to Figs 2 and 3, during operation, a wave 10 pushes the left buoyant member 4 up on arm 6, pivoting the arm 6 about pivot shaft 9, which in turn drives a hydraulic motor or gearbox connected to the generator 8, shown schematically by dashed line 7. As the wave 10 passes through, the platform tilts to the right of the page, as shown in Fig. 3, thus causing the left arm 6 to move downward, again causing pivoting motion at pivot shafts 9, driving the hydraulic motor or gearbox and in turn driving the generator 8.

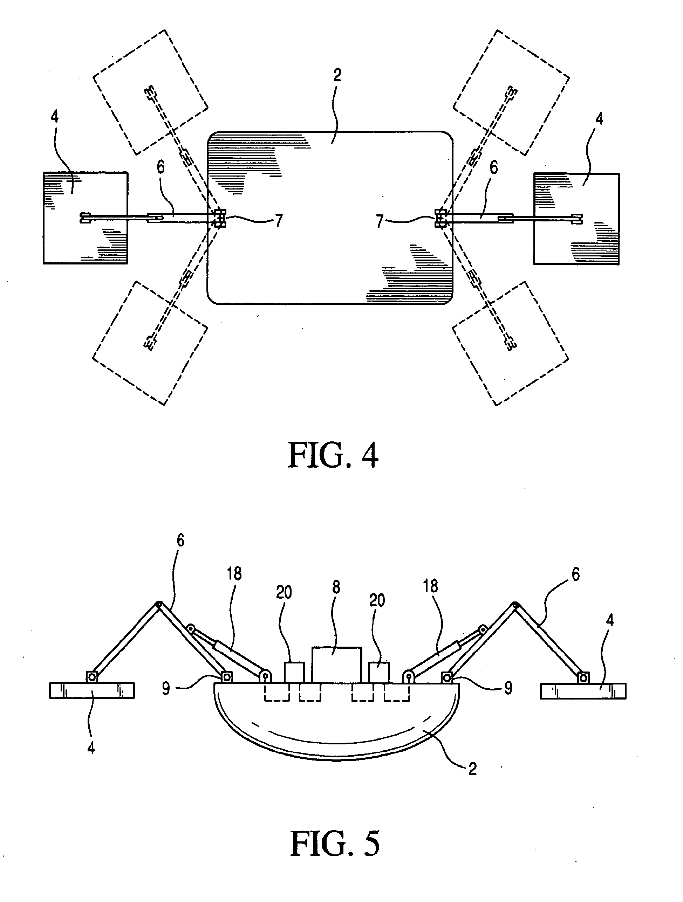

Referring to Fig. 4, the arms 6 may be rotated about a vertical axis 7 (perpendicular to the plane of the paper) at the connection point to the platform 2 to bring the members 4 closer to the platform 2, as shown in dashed lines, when the expected waves have shorter wavelengths. This is to increase the rocking motion of the platform 2 and the rotation of the pivot shafts 9.

Referring to Fig 5, a hydraulic cylinder and piston assembly 18 is attached to the arm 6 to harness the arcing motion of the arm 6 as it pivots about pivot shaft 9. In this embodiment, the pivot shafts 9 are preferably fixed and the arms 6 rotatable about the pivot shafts 6. The cylinder and piston assembly 18 drives a hydraulic motor 20 which in turn drives the generator 8.

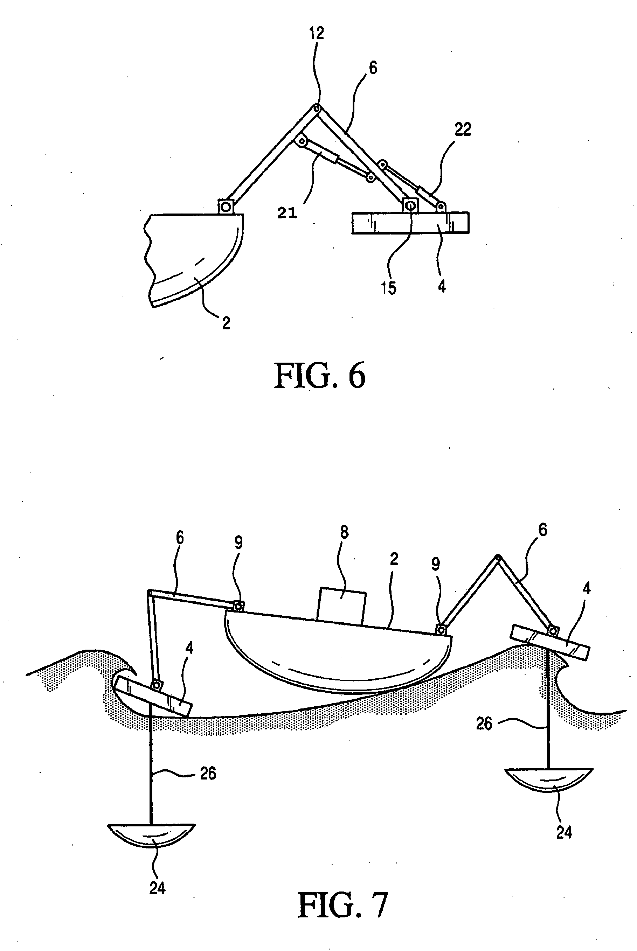

Referring to Fig. 6, the adjustment of the arm 6 to bring the member 4 closer to or farther away from the platform 2 may be accomplished by a cylinder and piston 21. The adjustment is made to take advantage of longer or shorter wavelengths of the waves. A cylinder and piston assembly 22 is attached to the arm 6 and the member 4 to harness the pivoting motion of the member 4 about the pivot shaft 15, as depicted in Figs. 2 and 3. The output of the cylinder and piston assembly 22 is transmitted to the hydraulic motors to drive the generator 8.

Referring to Fig. 7, a drag member 24 is attached to the buoyant member 4 via cable 26. The drag member 24 exerts a pulling force on the arm 6, increasing the amount of torque generated at the pivot shafts 9. The drag member 24 also keeps the buoyant member 4 attached to the water surface, thereby forcing it to float up and down with waves and preventing it to hang in the air above the water. An example of the drag member 24 is disclosed in US 2009/0322092 A. Other types of drag members may be used.

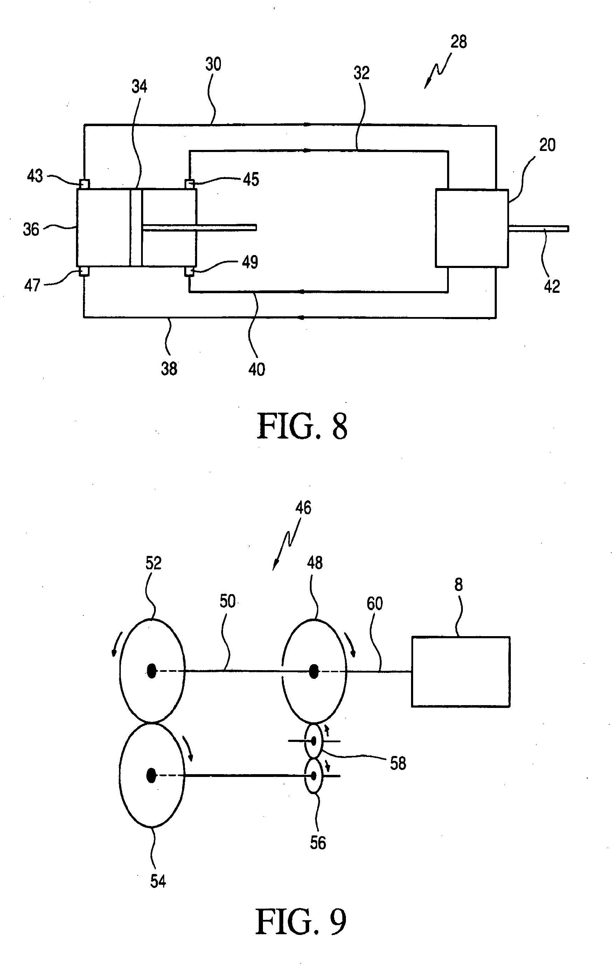

Referring to Fig. 8, the power output generated by the cylinder and piston assembly 18 may be harnessed by an exemplary hydraulic circuit 28 as a power converter. The hydraulic motor 20 is driven by pressurized lines 30 and 32 as the piston 34 within cylinder 36 is moved to the left or right by the pivoting motion of the arm 6 and/or the member 4 shown in Figs. 2 and 3. Return lines 38 and 40 recirculate the fluid back to the cylinder 36. Appropriate valves 43, 45, 47 and 49 are provided to insure only one-way flow for the fluid as represented by the arrows in the lines 30, 32, 38 and 40. When the piston 34 is moving to the left, the valves 43 and 49 are open and the valves 45 and 47 are closed. When the piston is moving to the right, the valves 75 and 47 are open while the valves 43 and 49 are closed. The output shaft 42 of the motor drives the generator 8. The hydraulic circuit 28 may also be used to harness the energy from the cylinder and piston assembly 22.

Referring to Fig. 9, an exemplary gear assembly 46 as a power converter to harness the pivoting motion of the pivot shafts 9 is disclosed. A gear 48 is attached to a shaft 50 which is operably connected to the pivot shaft 9. The gear 48 rotates clockwise with the shaft 50 but disengages when the shaft 50 rotates counterclockwise with a gear 52 as the pivot shaft 9 rotates in the same direction. The motion of the gear 52 is transferred to a gear 54 driving a gear 56, which further drives a gear 58 meshing with the gear 48. The output shaft 60 drives the generator 8. The shaft 50 will engage or disengage with the gear 48 or gear 52 such that the gear 48 will only rotate in one direction, for example, clockwise. A mechanical or electric clutch is provided with the gears 52 and 48 to attain the unidirectional rotation of the gear 48. Accordingly, when the shaft 50 is being driven clockwise by the pivot shaft 9, the gear 52 is disconnected from the shaft 50; and when the shaft 50 is being driven counterclockwise by the pivot shaft 9, the gear 48 is disconnected from the shaft 50. In this manner, torque in one direction is always being output to the generator 8. A similar arrangement may be used to harness the pivoting motion of the pivot shafts 15.

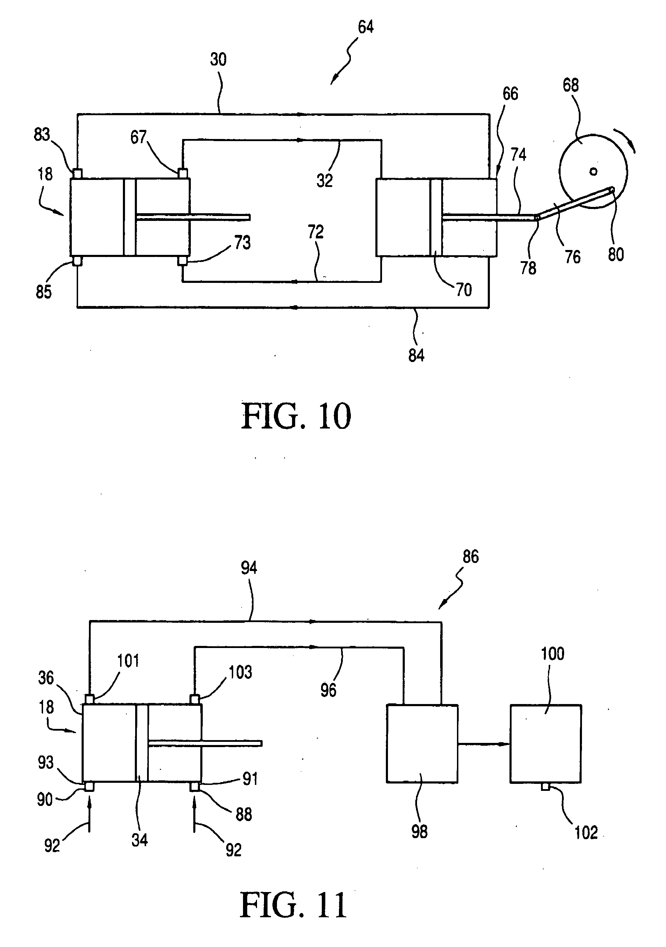

Referring to Fig. 10, another power converter 64 for harnessing the power output generated by the cylinder and piston assemblies 18 is disclosed. The cylinder and piston assembly 18 is configured to drive another cylinder and piston assembly 66, which is connected to a crank wheel 68. As the piston 34 moves to the right, fluid within the cylinder 36 is forced through a valve 67 into pressurized line 32, and drives a piston 70 in the cylinder and piston assembly 66 to the right. The return line 72 will be normally closed at this time by means of a valve 73. The piston 70 will drive the piston rod 74 to the right. A connecting rod 76, which is pivotally connected to the piston rod 74 and the crank wheel 78 at pivots 80, will drive the crank wheel 68 into rotation in one direction 82. The return line 84 will be normally open during this cycle through a valve 85, displacing the fluid in front of the piston 70 to the cylinder 36.

When the piston 34 moves to the left, fluid within the cylinder 36 to the left the of the piston 34 is pressurized and exits through a valve 83 into the pressurized line 30 to drive the piston 70 to the left. The valve 67 will be closed. The valve 85 in the return line 84 will be normally closed at this time, while the valve 73 in return line 72 is open to allow the fluid on the left of the piston 70 to return to the cylinder 36. The lines 30, 32, 72 and 84 are provided with the appropriate valves 67, 83, 73 and 85 that operate in such a way that: (1) when the line 32 is open and driving the piston 70 to the right, line 84 will be open and lines 30 and 72 will be closed; and (2) when line 30 is open to drive the piston 70 to the left, line 72 will also be open and lines 32 and 84 will be closed. The valves are preferably electrically operated, such as solenoid-type valves, and controlled by a controller for operation in the manner just described.

The power converter 64 may be also used to harness the power generated by the cylinder and piston assemblies 22.

Referring to Fig. 11, another power converter 86 is disclosed to harness the power generated by the cylinder and piston assemblies 18 and 22. The cylinder and piston assembly 18 is used to compress air as the piston 34 reciprocates from the wave action. Air inlets 88 and 90 are provided at respective ends of the cylinder 36, with appropriate valves 91 and 93 so that air flows only in the direction 92 indicated by the arrows. Pressurized lines 94 and 96 feed into a compressed air tank 98, which in turn feeds into a turbine 100 to drive the generator 8. Valves 101 and 103 are provided in the lines 94 and 96, respectively. When the piston 34 is moving to the left, the valves 101 and 91 are open while the valves 103 and 93 are closed. When the piston 34 is moving to the right, the valves 103 and 93 are open while the valves 91 and 101 are closed. An exhaust outlet 102 allows the compressed air to vent after expansion through the turbine.

When the piston 34 moves to the right in reaction to the wave action, air is compressed and passes through the line 96 into the tank 98 and air enters through the inlet 90. Air inlet 88 is closed at this time through the one-way valve. When the piston 34 moves to the left, the inlet 92 is closed with the one way valve and air is compressed and passes through the line 94 into the tank 98. The inlet 88 opens to admit ambient air. Compressed air from the tank 98 is released into the turbine 100, which drives the generator 8.

The motion of the piston 70 will continue to drive the crank wheel 68 in the same direction 82. The crank wheel 68 is used to drive the generator 8.

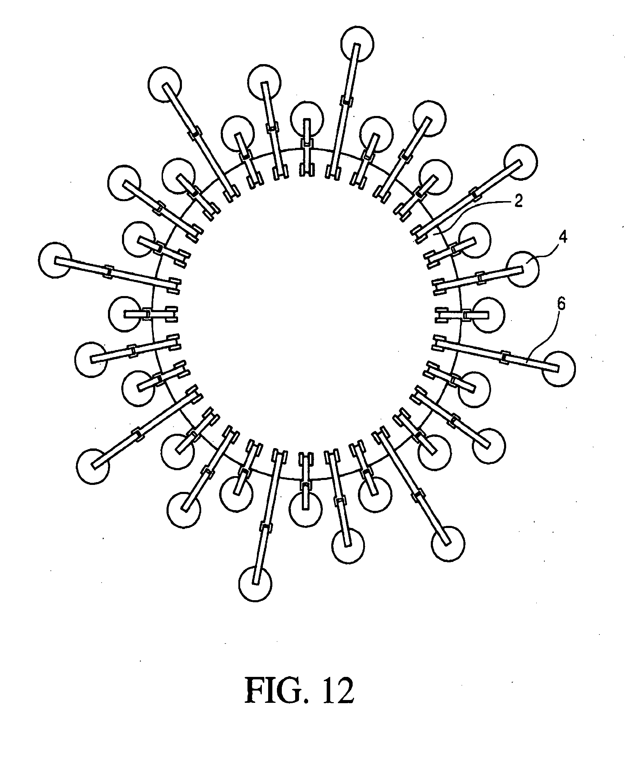

Referring to Fig. 12, a number of the arms 6 connected to the respective buoyant members 4, shown here as circular or round in plan view, are shown attached to the platform 2, also shown as circular or round in plan view. The arms 6 are shown in varying distances from the platform 2, allowing for the members 4 to take advantage of different predominant wave sizes. The adjustments to the arms 6 are made via the cylinder and piston assemblies 20, shown in Fig. 6.

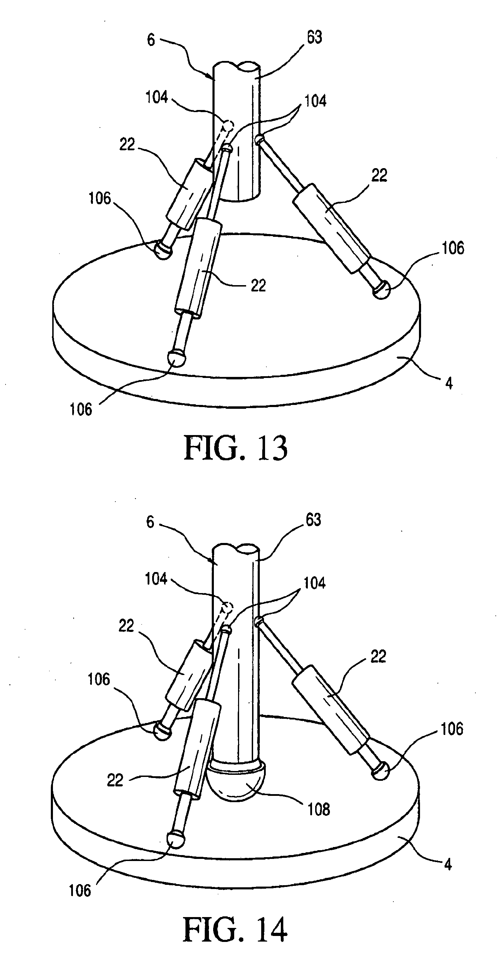

Referring to Figs. 13 and 14, the arm 6 may be connected to the member 4 with a plurality of cylinder and piston assemblies 22. Each cylinder and piston assembly 22 is connected to an end portion 63 of the arm 6 with a ball-joint 104 and to the member 4 with another ball-joint 106. The cylinder and piston assemblies 22 are preferably arranged symmetrically about the arm 6, about 120° apart from each other. In the embodiment shown in Fig. 12, the end portion 63 of the arm 6 is attached to the member 4 with a ball-joint 108. The ball-joint connections advantageously allow the members 4 freedom to sway and pivot in all directions in response to the waves.

The floating platform 2 is designed to maximize the natural rocking motion imparted by the waves, allowing for the maximum amount of flux, in any given wave conditions. The bottom of the platform 2 can be rounded, flat, or angled. The platform 2 can be built to maximize size and weight, for added inertia, or minimized to minimize inertia, depending on the prevalent wave conditions. A heavy large platform 2 can exert great pressures on relatively large buoyant members in larger waves, while a lighter more buoyant platform can be optimal for smaller waves.

The more the edges of the platform 2 rock, the more power can be generated by the generators 8. Thus the platform 2 is designed to maximize its natural instability. Relative stability of the platform 2 can be adjusted by the amount of torque power allowed to be exerted on the hydraulic motors or gearboxes. The electric output is determined by the size of the waves/swell, the size of the drags, the frequency of push/pulls per given unit of time, and the amount of torque/push/pulling force exerted on the hydraulic motors or gearboxes (determined in part by float mass and buoyancy).

The system disclosed herein is not only potentially capable of creating an immense amount of electricity for use on an industrial scale, but it also can support a staging area of commercial interest for use in fish-farming or other open ocean ventures.

The present invention disposes the majority of its components that may need to be maintained or replaced above the water and on the floating platform for easy accessibility. Whereas many previous wave action generator designs have critical components located underwater, the present invention has critical components, such as the generators, above the water.

The present invention makes use of the dynamic, oscillating movement that a platform undergoes in oceanic or turbulent waters. When incorporating a multitude of these devices on one flotation device, one can effectively harvest the energy exerted on each side/area of the platform, in effect also making angled movements (of the platform as a whole) useful for energy extraction as well. If for example, one has a square flotation barge, and a wave hits a certain corner of the barge, that corner in itself is generating electricity by way of the aforementioned method, before the wave passes to the remainder of the barge and as each station lifts and drops, pushes/pulls/cranks the hydraulics/gearboxes connected to the generator(s) or central generator.

While this invention has been described as having preferred design, it is understood that it is capable of further modification, uses and/or adaptations following in general the principle of the invention and including such departures from the present disclosure as come within known or customary practice in the art to which the invention pertains, and as may be applied to the essential features set forth, and fall within the scope of the invention or the limits of the appended claims.

## Claims

1. A wave action electric generating system, comprising:
a) a platform (2) for floating on water, the platform (2) being subject to rocking from side to side from wave action;
b) an electric generator (8);
c) a rigid arm (6) for extending over the water, the arm (6) including a first end pivotally attached to the platform (2) with a first pivot shaft (9);
d) a buoyant member (4) for being disposed on the water and pivotally connected to a second end of the arm (6) with a second pivot shaft (15) operably attached to the arm (6), the member when floating on water rises and falls with the waves, thereby alternately moving the arm (6) about the first pivot shaft (9) clockwise and counterclockwise; and
e) a power converter (28, 64) for converting the moving of the arm (6) to an output to drive the generator (8),
wherein the arm (6) is extendable or retractable to change a distance of said buoyant member (4) to be nearer or further away from said platform (2).

2. The wave action electric generating system as in claim 1, wherein the platform (2) is round in plan view.

3. The wave action eclectic generating system as in claim 1, wherein the arm (6) is rotatable about a vertical axis.

4. The wave action electric generating system as in claim 1, and further comprising a drag member (24) attached to the buoyant member (4).

5. The wave action electric generating system as in claim 1, wherein:
a) the first pivot shaft (9) is rigidly attached to the arm (6); and
b) the power converter (28, 64, 86) includes a plurality of gears (48, 52, 54, 56, 58) operably connected to the first pivot shaft (9) and the generator (8).

6. The wave action electric generating system as in claim 1, wherein:
a) the power converter (28, 64, 86) includes a cylinder (36) and a piston assembly (18, 66) operably attached to the arm (6);
b) the piston (34) reciprocates within the cylinder (36) in response to the moving of the arm (6) to generate an output of pressurized fluid; and
c) a hydraulic motor (20) operably connected to the output to drive the generator (8).

7. The wave action electric generating system as in claim 1, wherein:
a) the power converter (28, 64, 86) includes a cylinder (36) and piston assembly (18, 66) operably attached to the arm (6);
b) the piston (34, 70) reciprocates within the cylinder (36) in response to the moving of the arm (6) to generate an output of pressurized air; and
c) a pressure chamber (98) operably connected to the cylinder (36) and piston assembly (18, 66);
d) a turbine (100) operably connected to the pressure chamber (98) to drive the generator (8).

8. The wave action electric generating system as in claim 1, wherein:
a) the power converter (28, 64, 86) includes a first cylinder (36) and first piston assembly (18) operably attached to the arm (6);
b) the first piston (34) reciprocates within the first cylinder (36) in response to the moving of the arm (6) to generate an output of pressurized fluid;
c) a second cylinder and second piston assembly (66) operably connected to the output to cause reciprocating movement of the second piston (70);
d) a crank wheel (68) operably connected to the second piston (70) such that the reciprocating movement causes the crank wheel (68) to turn; and
e) the crank wheel (68) is operably connected to the generator (8) to drive the generator (8).

9. The wave action electric generating system, as in claim 1, wherein:
a) the power converter (28, 64, 86) includes a cylinder (36) and a piston assembly (18, 66) operably attached to the arm (6) and the buoyant member (4);
b) the piston (34, 70) reciprocates within the cylinder (36) in response to the buoyant member (4) moving about the second pivot (15) to generate an output of pressurized fluid; and
c) a hydraulic motor (20) operably connected to the output to drive the generator (8).

## Patentansprüche

1. System zur Erzeugung von Elektrizität durch Wellenschlag, mit:
a) einer Plattform (2) zum Treiben auf Wasser, die einem Schaukeln von Seite zu Seite durch Wellenschlag unterworfen ist,
b) einem elektrischen Generator (8),
c) einem starren Arm (6) zum Sich-Erstrecken über das Wasser, der ein erstes Ende aufweist, das mittels einer ersten schwenkbaren Welle (9) schwenkbar an der Plattform (2) angebracht ist,
d) einem schwimmfähigen Element (4) zum Auflegen auf Wasser und schwenkbaren Verbinden mit einem zweiten Ende des Arms (6) mittels einer zweiten schwenkbaren Welle (15), die in Wirkverbindung mit dem Arm (6) ist, wobei das Element beim Treiben auf Wasser mit den Wellen steigt und fällt und dadurch den Arm (6) alternierend im Uhrzeigersinn und gegen den Uhrzeigersinn um die erste schwenkbare Welle (9) bewegt, und
e) einem Spannungsumformer (28, 64) zum Umwandeln der Bewegung des Arms (6) in ein Ausgangssignal zum Antreiben des Generators (8),
wobei der Arm (6) ausfahrbar oder einziehbar ist, um einen Abstand des schwimmfähigen Elements (4) so zu ändern, dass es sich näher bei oder weiter weg von der Plattform (2) befindet.

2. System zur Erzeugung von Elektrizität durch Wellenschlag nach Anspruch 1, bei dem die Plattform (2) in der Draufsicht rund ist.

3. System zur Erzeugung von Elektrizität durch Wellenschlag nach Anspruch 1, bei dem der Arm (6) um eine vertikale Achse drehbar ist.

4. System zur Erzeugung von Elektrizität durch Wellenschlag nach Anspruch 1, das des weiteren ein Schleppelement (24) umfasst, das an dem schwimmfähigen Element (4) angebracht ist.

5. System zur Erzeugung von Elektrizität durch Wellenschlag nach Anspruch 1, bei dem:
a) die erste schwenkbare Welle (9) an dem Arm (6) starr befestigt ist und
b) der Spannungsumformer (28, 64, 86) eine Mehrzahl von Zahnrädern (48, 52, 54, 56, 58) aufweist, die mit der ersten schwenkbaren Welle (9) und dem Generator (8) in Wirkverbindung verbunden sind.

6. System zur Erzeugung von Elektrizität durch Wellenschlag nach Anspruch 1, bei dem:
a) der Spannungsumformer (28, 64, 86) einen Zylinder (36) und eine Kolbenanordnung (18, 66) aufweist, die mit dem Arm (6) in Wirkverbindung sind,
b) sich der Kolben (34) in Reaktion auf die Bewegung des Arms (6) in dem Zylinder (36) hin- und herbewegt, um eine Abgabe von mit Druck beaufschlagtem Fluid zu erzeugen, und
c) ein hydraulischer Motor (20) mit der Fluidabgabe in Wirkverbindung ist, um den Generator (8) anzutreiben.

7. System zur Erzeugung von Elektrizität durch Wellenschlag nach Anspruch 1, bei dem:
a) der Spannungsumformer (28, 64, 86) einen Zylinder (36) und eine Kolbenanordnung (18, 66) aufweist, die mit dem Arm (6) in Wirkverbindung sind,
b) sich der Kolben (34, 70) in Reaktion auf die Bewegung des Arms (6) in dem Zylinder (36) hin- und herbewegt, um eine Abgabe von mit Druck beaufschlagter Luft zu erzeugen, und
c) eine Druckkammer (98) mit dem Zylinder (36) und der Kolbenanordnung (18, 66) in Wirkverbindung ist,
d) eine Turbine (100) mit der Druckkammer (98) in Wirkverbindung ist, um den Generator (8) anzutreiben.

8. System zur Erzeugung von Elektrizität durch Wellenschlag nach Anspruch 1, bei dem:
a) der Spannungsumformer (28, 64, 86) einen ersten Zylinder (36) und eine erste Kolbenanordnung (18) aufweist, die mit dem Arm (6) in Wirkverbindung sind,
b) sich der erste Kolben (34) in Reaktion auf die Bewegung des Arms (6) in dem ersten Zylinder (36) hin- und herbewegt, um eine Abgabe von mit Druck beaufschlagtem Fluid zu erzeugen,
c) ein zweiter Zylinder und eine zweite Kolbenanordnung (66) in Wirkverbindung mit der Fluidabgabe sind, um eine Hin- und Herbewegung des zweiten Kolbens (70) zu bewirken,
d) ein Kurbelrad (68) mit dem zweiten Kolben (70) derart in Wirkverbindung ist, dass die Hin- und Herbewegung bewirkt, dass sich das Kurbelrad (68) dreht, und
e) das Kurbelrad (68) mit dem Generator (8) in Wirkverbindung ist, um den Generator (8) anzutreiben.

9. System zur Erzeugung von Elektrizität durch Wellenschlag nach Anspruch 1, bei dem:
a) der Spannungsumformer (28, 64, 86) einen Zylinder (36) und eine Kolbenanordnung (18, 66) aufweist, die mit dem Arm (6) und dem schwimmfähigen Element (4) in Wirkverbindung sind,
b) sich der Kolben (34, 70) in Reaktion auf eine Bewegung des schwimmfähigen Elements (4) um das zweite Gelenk (15) in dem Zylinder (36) hin- und herbewegt, um eine Abgabe von mit Druck beaufschlagtem Fluid zu erzeugen, und
c) ein Hydraulikmotor (20) mit der Fluidabgabe in Wirkverbindung ist, um den Generator (8) anzutreiben.

## Revendications

1. Système de génération d'électricité par action des vagues, comprenant :
a) une plate-forme (2) destinée à flotter sur l'eau, la plate-forme (2) étant soumise à un basculement d'un côté à l'autre de par l'action des vagues ;
b) un générateur électrique (8) ;
c) un bras rigide (6) destiné à s'étendre au-dessus de l'eau, le bras (6) incluant une première extrémité attachée en pivotement sur la plate-forme (2) avec un premier arbre de pivot (9) ;
d) un élément flottant (4) destiné à être disposé sur l'eau et connecté en pivotement à une seconde extrémité du bras (6) avec un second arbre de pivot (15) fonctionnellement attaché au bras (6), ledit élément montant et descendant avec les vagues lorsqu'il flotte sur l'eau, en déplaçant ainsi alternativement le bras (6) dans le sens des aiguilles d'une montre et dans le sens contraire aux aiguilles d'une montre autour du premier arbre de pivot (9) ; et
e) un convertisseur de puissance (28, 64) pour convertir le mouvement du bras (6) vers une sortie pour entraîner le générateur (8),
dans lequel le bras (6) est déployable ou rétractable pour changer une distance dudit élément flottant (4) pour se rapprocher ou s'éloigner de ladite plate-forme (2).

2. Système de génération d'électricité par action des vagues selon la revendication 1, dans lequel la plate-forme (2) est ronde en vue en plan.

3. Système de génération d'électricité par action des vagues selon la revendication 1, dans lequel le bras (6) est capable de rotation autour d'un axe vertical.

4. Système de génération d'électricité par action des vagues selon la revendication 1, et comprenant en outre un élément entraîné (24) attaché à l'élément flottant (4).

5. Système de génération d'électricité par action des vagues selon la revendication 1, dans lequel :
a) le premier arbre de pivot (9) est rigidement attaché au bras (6) ; et
b) le convertisseur de puissance (28, 64, 86) inclut une pluralité d'engrenages (48, 52, 54, 56, 58) fonctionnellement connectés au premier arbre de pivot (9) et au générateur (8).

6. Système de génération d'électricité par action des vagues selon la revendication 1, dans lequel :
a) le convertisseur de puissance (28, 64, 86) inclut un cylindre (36) et un ensemble à piston (18, 66) fonctionnellement attaché au bras (6) ;
b) le piston (34) se déplace en va-et-vient dans le cylindre (36) en réponse au mouvement du bras (6) pour générer en sortie un fluide sous pression ; et
c) un moteur hydraulique (20) est fonctionnellement connecté à la sortie pour entraîner le générateur (8).

7. Système de génération d'électricité par action des vagues selon la revendication 1, dans lequel :
a) le convertisseur de puissance (28, 64, 86) inclut un cylindre (36) et un ensemble à piston (18, 66) fonctionnellement attaché au bras (6) ;
b) le piston (34, 70) se déplace en va-et-vient dans le cylindre (36) en réponse au mouvement du bras (6) pour générer en sortie de l'air sous pression ; et
c) une chambre à pression (98) est fonctionnellement connectée au cylindre (36) et à l'ensemble à piston (18, 66) ;
d) une turbine (100) est fonctionnellement connectée à la chambre à pression (98) pour entraîner le générateur (8).

8. Système de génération d'électricité par action des vagues selon la revendication 1, dans lequel :
a) le convertisseur de puissance (28, 64, 86) inclut un premier cylindre (36) et un premier ensemble à piston (18) fonctionnellement attaché au bras (6) ;
b) le premier piston (34) se déplace en va-et-vient dans le premier cylindre (36) en réponse au mouvement du bras (6) pour générer en sortie un fluide sous pression ;
c) un second cylindre et un second ensemble à piston (66) sont fonctionnellement connectés à la sortie pour entraîner un mouvement de va-et-vient du second piston (70) ;
d) une roue d'entraînement (68) est fonctionnellement connectée au second piston (70) de telle façon que le mouvement de va-et-vient amène la roue d'entraînement (68) à tourner ; et
e) la roue d'entraînement (68) est fonctionnellement connectée au générateur (8) pour entraîner le générateur (8).

9. Système de génération d'électricité par action des vagues selon la revendication 1, dans lequel :
a) le convertisseur de puissance (28, 64, 86) inclut un cylindre (36) et un ensemble à piston (18, 66) fonctionnellement attaché au bras (6) et à l'élément flottant (4) ;
b) le piston (34, 70) se déplace en va-et-vient dans le cylindre (36) en réponse au mouvement de l'élément flottant (4) autour du second pivot (15) pour générer en sortie un fluide sous pression ; et
c) un moteur hydraulique (20) est fonctionnellement connecté à la sortie pour entraîner le générateur (8).
